(19) **Europäisches Patentamt / European Patent Office / Office européen des brevets**

(11) **EP 2 762 443 A1**

(12) **EUROPEAN PATENT APPLICATION**
published in accordance with Art. 153(4) EPC

(43) Date of publication:
06.08.2014 Bulletin 2014/32

(51) Int Cl.:
*C01B 15/013* (2006.01)

(21) Application number: 12834896.8

(22) Date of filing: 12.07.2012

(86) International application number:
PCT/JP2012/067822

(87) International publication number:
WO 2013/046864 (04.04.2013 Gazette 2013/14)

(84) Designated Contracting States:
AL AT BE BG CH CY CZ DE DK EE ES FI FR GB GR HR HU IE IS IT LI LT LU LV MC MK MT NL NO PL PT RO RS SE SI SK SM TR

(30) Priority: 30.09.2011 JP 2011216637

(71) Applicant: Mitsubishi Gas Chemical Company, Inc.
Tokyo 100-8324 (JP)

(72) Inventors:
• TAJIMA, Nobuo
  Mie 510-0886 (JP)
• ARAI, Yoshihisa
  Mie 510-0886 (JP)

(74) Representative: Müller-Boré & Partner
Patentanwälte PartG mbB
Friedenheimer Brücke 21
80639 München (DE)

(54) **METHOD FOR PRODUCING AQUEOUS HYDROGEN PEROXIDE SOLUTION**

(57) An object is to provide a method for producing an aqueous hydrogen peroxide solution, which can effectively remove an impurity, such as silicic acid or a silicate, contained in an aqueous hydrogen peroxide solution. The method of the present invention for producing an aqueous hydrogen peroxide solution has a first step for contacting an aqueous hydrogen peroxide solution with activated alumina which has been cleaned with purified water, and a second step for, after the first step, contacting the resultant aqueous hydrogen peroxide solution with a cation-exchange resin. The cation-exchange resin is preferably a hydrogen ion-type, strongly acid cation-exchange resin having a sulfonic acid group. The aqueous hydrogen peroxide solution being in contact with the activated alumina and the cation-exchange resin preferably has a temperature of 30°C or lower.

EP 2 762 443 A1

**Description**

FIELD OF THE INVENTION

The present invention relates to a method for producing an aqueous hydrogen peroxide solution.

BACKGROUND ART

An aqueous solution of hydrogen peroxide (aqueous hydrogen peroxide solution) is used in, e.g., a bleaching agent for paper and pulp, a chemical polishing agent, and a cleaning agent for silicon wafer. In recent years, the amount of the aqueous hydrogen peroxide solution used in the field of electronics industry is increasing. The aqueous hydrogen peroxide solution used in the field of electronics industry is required to have an extremely low impurity concentration.

Most of the hydrogen peroxide products are produced by an anthraquinone method. A general process for anthraquinone method is as follows.

An anthraquinone derivative, such as a 2-alkylanthraquinone, is hydrogenated in a water-insoluble solvent in the presence of a hydrogenating catalyst to form anthrahydroquinone.

The catalyst is separated by filtration, and then the anthrahydroquinone is allowed to be in contact with oxygen in air to oxidize the anthrahydroquinone, forming a 2-alkylanthraquinone and hydrogen peroxide.

The formed hydrogen peroxide is separated by extracting it with water.

The aqueous hydrogen peroxide solution obtained after extraction with water contains an impurity, such as silicic acid or a silicate (e.g., potassium silicate, sodium silicate, or aluminum silicate). These silicon components are mixed into the aqueous solution mainly from, e.g., air contacted with the anthrahydroquinone in the oxidization step or water used in the extraction step.

Conventionally, as a method for removing a silicon component contained in the aqueous hydrogen peroxide solution, the following methods have been known.

Patent document 1 discloses a method in which an aqueous hydrogen peroxide solution is contacted with a fluoride ion-type anion-exchange resin to remove a silicon component.

Patent document 2 discloses a method in which a fluorine compound is added to an aqueous hydrogen peroxide solution, and the resultant aqueous solution is contacted with a hydrogen ion-type cation-exchange resin having a sulfonic acid group, and then contacted with an anion-exchange resin.

Patent document 3 discloses a method in which, in purification of an aqueous hydrogen peroxide solution, hydrogen fluoride is added to the aqueous hydrogen peroxide solution in an amount of 0.05 milli-equivalent or more per 1 liter of the aqueous hydrogen peroxide solution, and then the resultant aqueous hydrogen peroxide solution is contacted with a hydroxide ion-type, strongly basic anion-exchange resin.

Patent document 4 discloses a method in which a coagulant is added to an aqueous hydrogen peroxide solution containing a silicon component, and solid impurities contained in the aqueous hydrogen peroxide solution are removed by filtration using a microfilter, and then the resultant aqueous solution is contacted with an anion-exchange resin which has been changed into a fluoride ion type using at least one fluorine compound selected from the group consisting of sodium fluoride, potassium fluoride, and ammonium fluoride, each having a $SiF_6$ content of 0.05% by weight or less.

However, the methods disclosed in patent documents 1 to 4 use fluorine, and therefore have problems in that the load on the environment is large and the treatment for waste water costs much.

Patent document 5 discloses a method in which an aqueous hydrogen peroxide solution is subjected to filtration using an ultrafiltration membrane to remove a silicon component. However, this method has a problem in that it is difficult to remove the silicon component dissolved in the aqueous solution.

Patent document 6 discloses a method in which, for removing an impurity, such as a metal or an organic material, contained in an aqueous hydrogen peroxide solution, the aqueous hydrogen peroxide solution is contacted with activated alumina for 1 to 5 minutes so that the activated alumina adsorbs the above impurity, removing the impurity from the aqueous solution. However, patent document 6 has no disclosure of a method for removing the silicon component contained in the aqueous hydrogen peroxide solution.

PRIOR ART REFERENCES

Patent Documents

Patent document 1: Japanese Patent No. 3797390
Patent document 2: Japanese Patent No. 3818323

Patent document 3: Japanese Unexamined Patent Publication No. Hei 11-79717
Patent document 4: Japanese Patent No. 3895540
Patent document 5: Japanese Patent No. 3849724
Patent document 6: Japanese Examined Patent Publication No. Sho 48-41158

DISCLOSURE OF THE INVENTION

Problems to be Solved by the Invention

An object of the present invention is to provide a method for producing an aqueous hydrogen peroxide solution, which can effectively remove an impurity, such as silicic acid or a silicate, contained in an aqueous hydrogen peroxide solution.

Means to Solve the Problems

The present invention is as follows.

<1> A method for producing an aqueous hydrogen peroxide solution, comprising:

a first step for contacting an aqueous hydrogen peroxide solution with activated alumina which has been cleaned with purified water, and
a second step for, after the first step, contacting the resultant aqueous hydrogen peroxide solution with a cation-exchange resin.

<2> The method according to item <1> above, wherein the cation-exchange resin is a hydrogen ion-type, strongly acid cation-exchange resin having a sulfonic acid group.
<3> The method according to item <1> or <2> above, wherein the aqueous hydrogen peroxide solution being in contact with the activated alumina and the cation-exchange resin has a temperature of 30°C or lower.
<4> The method according to any one of items <1> to <3> above, wherein, in the first step, the aqueous hydrogen peroxide solution is allowed to pass through the activated alumina in a continuous manner, and
wherein, in the second step, the aqueous hydrogen peroxide solution is allowed to pass through the cation-exchange resin in a continuous manner.
<5> The method according to item <4> above, wherein the aqueous hydrogen peroxide solution passing through the activated alumina has a space velocity (SV) of 0.5 to 50 $Hr^{-1}$, and
wherein the aqueous hydrogen peroxide solution passing through the cation-exchange resin has a space velocity (SV) of 1 to 300 $Hr^{-1}$.
<6> The method according to any one of items <1> to <5> above, further comprising:

a third step for, after the first step, subjecting the resultant aqueous hydrogen peroxide solution to filtration using a filter having an average pore diameter of 1 $\mu$m or less.

<7> The method according to any one of items <1> to <6> above, further comprising:

a fourth step for, after the second step, adding at least one substance selected from phosphoric acid, pyrophosphoric acid, a phosphate, and a pyrophosphate to the aqueous hydrogen peroxide solution, and
a fifth step for, after the fourth step, contacting the resultant aqueous hydrogen peroxide solution with an anion-exchange resin and/or a mixed bed of an anion-exchange resin and a cation-exchange resin.

<8> The method according to item <7> above, wherein, in the fourth step, the at least one substance selected from phosphoric acid, pyrophosphoric acid, a phosphate, and a pyrophosphate is added to the aqueous hydrogen peroxide solution so that the concentration of the total of phosphoric acid ions and pyrophosphoric acid ions contained in the aqueous hydrogen peroxide solution becomes 0.01 to 100 ppm.
<9> The method according to item <7> or <8> above, wherein, in the fifth step, the aqueous hydrogen peroxide solution being in contact with the anion-exchange resin and/or the mixed bed of an anion-exchange resin and a cation-exchange resin has a temperature of 30°C or lower.
<10> The method according to any one of items <7> to <9> above, wherein, in the fifth step, the aqueous hydrogen peroxide solution is contacted with the anion-exchange resin and/or the mixed bed of an anion-exchange resin and a cation-exchange resin in a continuous manner.

<11> The method according to item <10> above, wherein, in the fifth step, the aqueous hydrogen peroxide solution being in contact with the anion-exchange resin and/or the mixed bed of an anion-exchange resin and a cation-exchange resin has a space velocity (SV) of 1 to 300 Hr$^{-1}$.

<12> The method according to any one of items <1> to <11> above, further comprising:

a sixth step for contacting the aqueous hydrogen peroxide solution with a synthetic adsorbent.

<13> The method according to item <12> above, wherein, in the sixth step, the aqueous hydrogen peroxide solution is allowed to pass through the synthetic adsorbent in a continuous manner.

<14> The method according to item <13> above, wherein, in the sixth step, the aqueous hydrogen peroxide solution passing through the synthetic adsorbent has a space velocity (SV) of 1 to 300 Hr$^{-1}$.

<15> The method according to any one of items <1> to <14> above, wherein the aqueous hydrogen peroxide solution is an aqueous hydrogen peroxide solution prepared by an anthraquinone method.

Effect of the Invention

In the present invention, there can be provided a method for producing an aqueous hydrogen peroxide solution, which can effectively remove an impurity, such as silicic acid or a silicate, contained in an aqueous hydrogen peroxide solution.

BRIEF DESCRIPTION OF THE DRAWINGS

[Fig. 1] Flow sheet for Example 1.
[Fig. 2] Flow sheet for Example 2.
[Fig. 3] Flow sheet for Example 3.
[Fig. 4] Flow sheet for Example 4.
[Fig. 5] Flow sheet for Comparative Example 1.

BEST MODE FOR CARRYING OUT THE INVENTION

Hereinbelow, the method for producing an aqueous hydrogen peroxide solution according to the present invention will be described in detail. In the present specification, the "ppm", "ppb", and "ppt" indicate "ppm by weight", "ppb by weight", and "ppt by weight", respectively.

The method for producing an aqueous hydrogen peroxide solution according to the present invention has a first step for contacting an aqueous hydrogen peroxide solution with activated alumina, and a second step for, after the first step, contacting the resultant aqueous hydrogen peroxide solution with a cation-exchange resin.

The activated alumina used in the present invention preferably contains alumina ($Al_2O_3$) in an amount of 90% by weight or more, more preferably 95% by weight or more, further preferably 99% by weight or more. The alumina is preferably γ-alumina.

The activated alumina used in the present invention preferably has a specific surface area of 100 to 600 m$^2$/g, more preferably 120 to 500 m$^2$/g.

The activated alumina preferably has a center particle diameter of 0.001 to 10 mm, more preferably 0.1 to 6 mm. The center particle diameter means a diameter corresponding to the 50% cumulative weight diameter (d50) in the particle size distribution. The particle size distribution of the activated alumina can be measured by, for example, a laser diffraction particle size distribution measurement apparatus.

[First step]

In the first step, an aqueous hydrogen peroxide solution containing an impurity, such as silicic acid or a silicate (e.g., potassium silicate, sodium silicate, or aluminum silicate), is contacted with activated alumina which has been cleaned with purified water.

As purified water for cleaning the activated alumina, water purified by a known method can be used. For example, water purified by ion-exchange, distillation, activated carbon, a reverse osmosis membrane, an ultrafiltration membrane, a microfiltration membrane, or a combination of these methods can be used. In the first step, it is especially preferred that water purified by ion-exchange and/or a reverse osmosis membrane is used.

The purified water used for cleaning the activated alumina preferably has a silicon concentration of 5 ppb or less, more preferably 1 ppb or less. The silicon concentration of the purified water can be measured, for example, using an atomic absorption spectrometer spectrAA 880Z (manufactured by Varian, Inc.).

As the purified water for cleaning the activated alumina, for example, ultrapure water obtained by purifying ion-exchanged water with MINIPURE TW-300RU (manufactured by Nomura Micro Science Co., Ltd.) can be used.

The cleaning treatment for the activated alumina is performed until the purified water obtained after being in contact with the activated alumina preferably has a silicon concentration of 5 ppb or less, more preferably 1 ppb or less.

The activated alumina may be cleaned using an aqueous solution of an inorganic acid, such as nitric acid, hydrochloric acid, sulfuric acid, or phosphoric acid, and then cleaned using purified water.

By contacting an aqueous hydrogen peroxide solution with the activated alumina, which has been cleaned with purified water, the silicon component contained in the aqueous hydrogen peroxide solution can be effectively removed.

The first step for contacting an aqueous hydrogen peroxide solution with the activated alumina can be conducted either in a continuous manner or in a batch-wise manner.

When the first step is conducted in a continuous manner, for example, an aqueous hydrogen peroxide solution is continuously fed to a column packed with a bed of the activated alumina.

When the first step is conducted in a batch-wise manner, for example, the activated alumina and aqueous hydrogen peroxide solution are mixed together in a vessel and stirred for a predetermined period of time and then, the activated alumina is separated from the aqueous hydrogen peroxide solution, and the aqueous hydrogen peroxide solution is withdrawn from the vessel.

Among the continuous manner and batch-wise manner, preferred is the continuous manner which exhibits high production efficiency for aqueous hydrogen peroxide solution.

When the first step is conducted in a continuous manner, it is preferred that the aqueous hydrogen peroxide solution passing through the bed of activated alumina has a space velocity (SV) of 0.5 to 50 $Hr^{-1}$. In this instance, the aqueous hydrogen peroxide solution preferably has a temperature of 0 to 50°C, more preferably 5 to 40°C, further preferably 5 to 30°C.

The space velocity (SV) used here is represented by the following formula (1):

$$\text{Space velocity (SV)}[Hr^{-1}]$$
$$= \text{Amount of the aqueous hydrogen peroxide solution fed } [LHr^{-1}]/\text{Volume of}$$
$$\text{the bed of activated alumina } [L] \quad\quad (1)$$

When the first step is conducted in a continuous manner, it is preferred that the column packed with the activated alumina is placed so as to be vertical. In this case, the aqueous hydrogen peroxide solution may be allowed to flow through the column either in the direction of from the upper portion to the lower portion of the column or in the direction of from the lower portion to the upper portion of the column.

The aqueous hydrogen peroxide solution which has been in contact with the activated alumina contains a metal, such as aluminum, calcium, magnesium, or sodium, dissolved out from the activated alumina. Such an aqueous hydrogen peroxide solution cannot be advantageously used in, e.g., sterilization for beverage containers and food containers, or a cleaning agent in the field of electronics industry.

[Second step]

In the method of the present invention, after conducting the first step, the resultant aqueous hydrogen peroxide solution is contacted with a cation-exchange resin (second step). Thus, a metal, such as aluminum, calcium, magnesium, or sodium, contained in the aqueous hydrogen peroxide solution can be effectively removed.

The second step can be conducted either in a continuous manner or in a batch-wise manner.

When the second step is conducted in a continuous manner, for example, the aqueous hydrogen peroxide solution is continuously fed to a column packed with a bed of the cation-exchange resin.

When the second step is conducted in a batch-wise manner, for example, the cation-exchange resin and aqueous hydrogen peroxide solution are mixed together in a vessel and stirred for a predetermined period of time and then, the cation-exchange resin is separated from the aqueous hydrogen peroxide solution, and the aqueous hydrogen peroxide solution is withdrawn from the vessel.

Among the continuous manner and batch-wise manner, preferred is the continuous manner which exhibits high production efficiency for aqueous hydrogen peroxide solution.

When the second step is conducted in a continuous manner, it is preferred that the aqueous hydrogen peroxide solution passing through the bed of cation-exchange resin has a space velocity (SV) of 1 to 300 $Hr^{-1}$. In this instance, the aqueous hydrogen peroxide solution preferably has a temperature of 30°C or lower, more preferably -10 to 20°C.

When the aqueous hydrogen peroxide solution has a temperature of higher than 30°C, the amount of the sulfonic acid groups in the cation-exchange resin dissolved in the solution is disadvantageously increased.

The space velocity (SV) used here is represented by the following formula (2):

$$\text{Space velocity (SV)[Hr}^{-1}]$$
$$= \text{Amount of the aqueous hydrogen peroxide solution fed [LHr}^{-1}]/\text{Volume of}$$
$$\text{the bed of cation-exchange resin [L]} \qquad (2)$$

When the second step is conducted in a continuous manner, it is preferred that the column packed with the cation-exchange resin is placed so as to be vertical. In this case, the aqueous hydrogen peroxide solution may be allowed to flow through the column either in the direction of from the upper portion to the lower portion of the column or in the direction of from the lower portion to the upper portion of the column.

It is preferred that the cation-exchange resin used in the second step is a strongly acid cation-exchange resin having a sulfonic acid group ($-SO_3H$) as an ion-exchange group. Examples of the cation-exchange resins usable in the second step include Amberlite 200CT, 252 (manufactured by Rohm and Haas Company) and DIAION PK224, PK228 (manufactured by Mitsubishi Chemical Corporation).

There are cation-exchange resins of a sodium ion type and of a hydrogen ion type. Generally, a commercially available cation-exchange resin is of a sodium ion type. In the second step in the present invention, a cation-exchange resin which has been changed into a hydrogen ion type is preferably used.

For changing the cation-exchange resin into a hydrogen ion type, an aqueous solution of sulfuric acid or hydrochloric acid is first fed to a column packed with a bed of cation-exchange resin. Then, water is fed to the bed of cation-exchange resin to satisfactorily clean the cation-exchange resin. As cleaning water, the above-described purified water is preferably used.

In the case of using a commercially available cation-exchange resin, when the cation-exchange resin is of a hydrogen ion type (e.g., Amberlite 200CTH), the cation-exchange resin as such can be used in the second step.

By the method of the present invention for producing an aqueous hydrogen peroxide solution, the concentration of the silicon component in the aqueous hydrogen peroxide solution can be reduced to preferably 5 ppb or less, more preferably 1 ppb or less.

By the method of the present invention for producing an aqueous hydrogen peroxide solution, the concentration of a metal component, such as aluminum, calcium, magnesium, or sodium, which is dissolved out from the activated alumina, in the aqueous hydrogen peroxide solution can be reduced to a level that causes no problem from a practical point of view.

The aqueous hydrogen peroxide solution can be prepared by, for example, a known method, such as an anthraquinone method or a direct synthesis method. The direct synthesis method is a method in which hydrogen and oxygen are directly reacted with each other to synthesize hydrogen peroxide.

The aqueous hydrogen peroxide solution before contacted with the activated alumina contains, as an impurity, a silicon component, such as silicic acid or a silicate (e.g., potassium silicate, sodium silicate, or aluminum silicate).

The concentration of the silicon component in the aqueous hydrogen peroxide solution before contacted with the activated alumina is preferably 1 ppm or less, more preferably 200 ppb or less, further preferably 50 ppb or less. When the concentration of the silicon component in the aqueous hydrogen peroxide solution is more than 1 ppm, not only is the life of the activated alumina markedly reduced, but also the cost for purification of the aqueous hydrogen peroxide solution is increased.

The concentration of a metal (such as iron, manganese, chromium, sodium, calcium, or aluminum) or ions thereof in the aqueous hydrogen peroxide solution before contacted with the cation-exchange resin is preferably 10 ppm or less, more preferably 1 ppm or less.

The concentration of an organic impurity in the aqueous hydrogen peroxide solution before contacted with the activated alumina is preferably 300 ppm or less, more preferably 100 ppm or less, in terms of a total carbon concentration (hereinafter, frequently referred to as "TC concentration").

With respect to the concentration of hydrogen peroxide in the aqueous hydrogen peroxide solution, there is no particular limitation, but the hydrogen peroxide concentration of the aqueous hydrogen peroxide solution is preferably 5 to 70% by weight.

The activated alumina with which the aqueous hydrogen peroxide solution has been in contact has a silicon component attached thereto. By cleaning the activated alumina with an aqueous solution of an alkali metal hydroxide, such as sodium hydroxide or potassium hydroxide, the silicon component attached to the activated alumina can be removed. The activated alumina cleaned with an aqueous solution of an alkali metal hydroxide can be used again for removing the silicon component in the first step.

The aqueous alkali metal hydroxide solution used for cleaning the activated alumina preferably has a temperature of 0 to 100°C, more preferably 0 to 50°C.

The aqueous alkali metal hydroxide solution used for cleaning the activated alumina preferably has a concentration of 0.5 to 20% by weight, more preferably 1 to 10% by weight.

The activated alumina may be cleaned with an aqueous alkali metal hydroxide solution, and then further cleaned with purified water and/or an aqueous solution of an inorganic acid, such as nitric acid, hydrochloric acid, sulfuric acid, or phosphoric acid.

[Third step]

After the first step, the resultant aqueous hydrogen peroxide solution may be subjected to filtration using a filter having an average pore diameter of 1 $\mu$m or less (third step).

By conducting the third step, a solid material, such as alumina, contained in the aqueous hydrogen peroxide solution can be removed. The third step may be conducted either before the second step or after the second step.

It is preferred that the filter used in the third step does not easily deteriorate due to the aqueous hydrogen peroxide solution and is not dissolved in the aqueous hydrogen peroxide solution to generate an impurity.

The material for the filter used in the third step is preferably, for example, a fluororesin, a polyolefin resin, a polysulfone resin, or a polycarbonate resin. Especially preferred is polytetrafluoroethylene (PTFE).

With respect to the filter used in the third step, there is no particular limitation, but preferred is a filter, for example, in a flat membrane form, in a pleated form, in a spiral form, or in a hollow fiber form.

The filter used in the third step preferably has an average pore diameter of 1.0 $\mu$m or less, more preferably 0.01 to 1.0 $\mu$m, further preferably 0.01 to 0.5 $\mu$m.

With respect to the temperature of the aqueous hydrogen peroxide solution passing through the filter, there is no particular limitation, but the temperature of the aqueous hydrogen peroxide solution is preferably 0 to 50°C, more preferably 5 to 40°C, further preferably 5 to 30°C.

With respect to the rate of the aqueous hydrogen peroxide solution passing through the filter, there is no particular limitation.

The aqueous hydrogen peroxide solution can be passed through the filter two or more times.

[Fourth step]

After the second step, at least one substance selected from phosphoric acid, pyrophosphoric acid, a phosphate, and a pyrophosphate may be added to the aqueous hydrogen peroxide solution (fourth step). The fourth step may be conducted either before the third step or after the third step.

Hereinafter, phosphoric acid, pyrophosphoric acid, a phosphate, and a pyrophosphate are referred to as "phosphoric acid and the like".

[Fifth step]

After the fourth step, the resultant aqueous hydrogen peroxide solution may be contacted with an anion-exchange resin and/or a mixed bed of an anion-exchange resin and a cation-exchange resin (fifth step).

By conducting the fourth step and fifth step, the concentration of a metal contained in the aqueous hydrogen peroxide solution can be reduced to a ppt level.

The fifth step can be conducted either in a continuous manner or in a batch-wise manner.

When the fifth step is conducted in a continuous manner, for example, the aqueous hydrogen peroxide solution is continuously fed to a column packed with a bed of the anion-exchange resin and/or a column packed with the mixed bed of an anion-exchange resin and a cation-exchange resin.

When the fifth step is conducted in a batch-wise manner, for example, the anion-exchange resin and aqueous hydrogen peroxide solution are mixed together in a vessel and stirred for a predetermined period of time and then, the anion-exchange resin is separated from the aqueous hydrogen peroxide solution, and the aqueous hydrogen peroxide solution is withdrawn from the vessel. Alternatively, the anion-exchange resin, cation-exchange resin, and aqueous hydrogen peroxide solution are mixed together in a vessel and stirred for a predetermined period of time and then, the anion-exchange resin and cation-exchange resin are separated from the aqueous hydrogen peroxide solution, and the aqueous hydrogen peroxide solution is withdrawn from the vessel.

Among the continuous manner and batch-wise manner, preferred is the continuous manner which exhibits high production efficiency for aqueous hydrogen peroxide solution.

Examples of phosphoric acid and the like added to the aqueous hydrogen peroxide solution in the fourth step include phosphoric acid, triammonium phosphate, tripotassium phosphate, trisodium phosphate, dipotassium hydrogenphosphate, disodium hydrogenphosphate, ammonium sodium hydrogenphosphate, diammonium hydrogenphosphate, ammonium dihyrogenphosphate, potassium dihydrogenphosphate, sodium dihyrogenphosphate, sodium pyrophosphate, potassium pyrophosphate, ammonium pyrophosphate, and disodium dihydrogenpyrophosphate. Of these, preferred is phosphoric acid.

The fourth step and fifth step can be conducted by, for example, the following method (1) or (2).

(1) A substance selected from phosphoric acid and the like is added to the aqueous hydrogen peroxide solution so as to adjust a predetermined concentration. Then, the resultant aqueous hydrogen peroxide solution is contacted with an anion-exchange resin and/or a mixed bed of an anion-exchange resin and a cation-exchange resin.

(2) A substance selected from the phosphoric acid and the like is continuously fed to the aqueous hydrogen peroxide solution flowing through a piping, and the aqueous hydrogen peroxide solution is continuously fed to an anion-exchange resin and/or a mixed bed of an anion-exchange resin and a cation-exchange resin.

In the fourth step, at least one substance selected from phosphoric acid and the like is added to the aqueous hydrogen peroxide solution. After adding phosphoric acid and the like, the concentration of the total of phosphoric acid ions ($PO_4^{3-}$) and pyrophosphoric acid ions ($P_2O_7^{4-}$) contained in the aqueous hydrogen peroxide solution is preferably 0.01 to 100 ppm, more preferably 0.1 to 20 ppm, further preferably 0.1 to 10 ppm, especially preferably 0.1 to 1 ppm.

When the concentration of the phosphoric acid and the like in the aqueous hydrogen peroxide solution falls outside of the above preferred range, there is a possibility that the resin used for purification of the aqueous hydrogen peroxide solution suffers a damage. Further, there is a possibility that the aqueous solution causes a metal impurity, such as iron or chromium, to be dissolved out from a material for, e.g., a storage container or piping (for example, an austenite stainless steel material).

The concentration of pyrophosphoric acid ions ($P_2O_7^{4-}$) in the aqueous hydrogen peroxide solution can be measured by the same method as the method for phosphoric acid ions ($PO_4^{3-}$).

For example, the concentration of pyrophosphoric acid ions ($P_2O_7^{4-}$) in the aqueous hydrogen peroxide solution can be measured using ion chromatography DX-500 (manufactured by DIONEX Corporation). In this case, a concentration column Ionpac AG17-C (manufactured by DIONEX Corporation), a guard column Ionpac AG11 (manufactured by DIONEX Corporation), a separation column Ionpac AS-11 (manufactured by DIONEX Corporation), and a loop with 2 ml can be used. A standard solution can be prepared by dissolving a special grade reagent (manufactured by Kanto Chemical Co., Inc.) in purified water. An eluent can be prepared by dissolving sodium hydroxide of a grade for precision analysis (manufactured by Kanto Chemical Co., Inc.) in purified water.

Examples of the anion-exchange resins usable in the fifth step include a strongly basic resin comprising a styrene-divinylbenzene crosslinked copolymer as a matrix and having a quaternary ammonium group as an ion-exchange group, a weakly basic resin comprising a styrene-divinylbenzene crosslinked copolymer as a matrix and having a primary or secondary amine and a tertiary amine as an ion-exchange group, a resin comprising an acrylic acid crosslinked polymer as a matrix and having a tertiary amine as an ion-exchange group, and a pyridine resin comprising a polymer having a pyridyl group or a substituted pyridyl group. Of these, preferred is a strongly basic anion-exchange resin having a quaternary ammonium group as an ion-exchange group. Various types of anion-exchange resins having a quaternary ammonium group as an ion-exchange group are commercially available. Examples of the anion-exchange resins having a quaternary ammonium group as an ion-exchange group include DIAION PA316, 318L (manufactured by Mitsubishi Chemical Corporation), DIAION SA10A (manufactured by Mitsubishi Chemical Corporation), and Amberlite IRA900J, IRA904 (manufactured by Rohm and Haas Company). A commercially available anion-exchange resin is generally of a chloride ion type.

In the fifth step, the anion-exchange resin changed into a carbonic acid ion type or a bicarbonic acid ion type is used. For changing the anion-exchange resin into a carbonic acid ion type or a bicarbonic acid ion type, for example, an aqueous solution of a carbonate or a bicarbonate is fed to a column packed with a bed of anion-exchange resin, and then purified water is fed to the column.

More specifically, for example, an aqueous solution of sodium carbonate or sodium bicarbonate is fed to a column packed with a bed of anion-exchange resin. Then, water is fed to the bed of anion-exchange resin to satisfactorily clean the anion-exchange resin. As cleaning water, the above-described purified water is preferably used.

It is preferred that the cation-exchange resin used in the fifth step is a strongly acid cation-exchange resin having a sulfonic acid group as an ion-exchange group. Examples of cation-exchange resins include Amberlite 200CT, 252 (manufactured by Rohm and Haas Company) and DIAION PK224, PK228 (manufactured by Mitsubishi Chemical Corporation).

There are cation-exchange resins of a sodium ion type and of a hydrogen ion type. Generally, a commercially available cation-exchange resin is of a sodium ion type. In the fifth step in the present invention, a cation-exchange resin which has been changed into a hydrogen ion type is preferably used.

For changing the cation-exchange resin into a hydrogen ion type, an aqueous solution of sulfuric acid or hydrochloric acid is first fed to a column packed with a bed of cation-exchange resin. Then, water is fed to the bed of cation-exchange resin to satisfactorily clean the cation-exchange resin. As cleaning water, the above-described purified water is preferably used.

In the case of using a commercially available cation-exchange resin, when the cation-exchange resin is of a hydrogen ion type (e.g., Amberlite 200CTH), the cation-exchange resin as such can be used in the fifth step.

In the fifth step, when a mixed bed of an anion-exchange resin and a cation-exchange resin is used, a preferred capacity ratio of the cation-exchange resin to the anion-exchange resin (1) is 0.3 to 3, and a more preferred capacity ratio of the cation-exchange resin to the anion-exchange resin (1) is 0.5 to 2. It is preferred that the anion-exchange resin and cation-exchange resin are uniformly mixed with each other.

When the fifth step is conducted in a continuous manner, it is preferred that the aqueous hydrogen peroxide solution passing through the bed of anion-exchange resin and/or the bed comprising a mixed bed of an anion-exchange resin and a cation-exchange resin has a space velocity (SV) of 1 to 300 $Hr^{-1}$. In this instance, the aqueous hydrogen peroxide solution preferably has a temperature of 30°C or lower, more preferably -10 to 20°C. When the aqueous hydrogen peroxide solution has a temperature of higher than 30°C, hydrogen peroxide is disadvantageously likely to be decomposed to form air bubbles in the resin layer, reducing the degree of purification of the aqueous hydrogen peroxide solution.

The space velocity (SV) used here is represented by the following formula (3):

$$\text{Space velocity (SV)}[Hr^{-1}]$$
$$= \text{Amount of the aqueous hydrogen peroxide solution fed } [LHr^{-1}]/\text{Volume of}$$
$$\text{the bed comprising the anion-exchange resin and/or the mixed bed of an}$$
$$\text{anion-exchange resin and a cation-exchange resin } [L] \qquad\qquad (3)$$

When the fifth step is conducted in a continuous manner, it is preferred that the column packed with the anion-exchange resin and/or the mixed bed of an anion-exchange resin and a cation-exchange resin is placed so as to be vertical. In this case, the aqueous hydrogen peroxide solution may be allowed to flow through the column either in the direction of from the upper portion to the lower portion of the column or in the direction of from the lower portion to the upper portion of the column.

[Sixth step]

The aqueous hydrogen peroxide solution may be further contacted with a synthetic adsorbent (sixth step).

By contacting the aqueous hydrogen peroxide solution with a synthetic adsorbent, an organic impurity contained in the aqueous hydrogen peroxide solution can be removed.

The sixth step may be conducted either before the first step or after the first step.

The sixth step can be conducted either in a continuous manner or in a batch-wise manner.

When the sixth step is conducted in a continuous manner, for example, the aqueous hydrogen peroxide solution is continuously fed to a column packed with a bed of the synthetic adsorbent.

When the sixth step is conducted in a batch-wise manner, for example, the synthetic adsorbent and aqueous hydrogen peroxide solution are mixed together in a vessel and stirred for a predetermined period of time and then, the synthetic adsorbent is separated from the aqueous hydrogen peroxide solution, and the aqueous hydrogen peroxide solution is withdrawn from the vessel.

Among the continuous manner and batch-wise manner, preferred is the continuous manner which exhibits high production efficiency for aqueous hydrogen peroxide solution.

As examples of synthetic adsorbents used in the sixth step, there can be mentioned resins having a network molecular structure and having no ion-exchange group.

Examples of synthetic adsorbents include a styrene-divinylbenzene copolymer and an acrylic ester polymer. As a synthetic adsorbent, there can be used one which is obtained by subjecting the above resin to halogenation or halomethylation. A synthetic adsorbent having a modified network molecular structure can also be used. Examples of such synthetic adsorbents include SEPABEADS SP207, SP206, SP825, SP850, SP70, SP700 (manufactured by Mitsubishi Chemical Corporation), and Amberlite XAD2, XAD4, XAD7HP, XAD1180N, XAD2000 (manufactured by Rohm and Haas Company).

When the sixth step is conducted in a continuous manner, it is preferred that the aqueous hydrogen peroxide solution passing through the bed of synthetic adsorbent has a space velocity (SV) of 1 to 50 $Hr^{-1}$. In this instance, the aqueous hydrogen peroxide solution preferably has a temperature of 40°C or lower, more preferably -10 to 30°C, further preferably -10 to 20°C.

The space velocity (SV) used here is represented by the following formula (4):

$$\text{Space velocity (SV)}[\text{Hr}^{-1}]$$
$$= \text{Amount of the aqueous hydrogen peroxide solution fed }[\text{LHr}^{-1}]/\text{Volume of the bed of synthetic adsorbent }[\text{L}] \qquad (4)$$

EXAMPLES

Hereinbelow, the present invention will be described in more detail with reference to the following Examples, which should not be construed as limiting the scope of the present invention.

[Example 1]

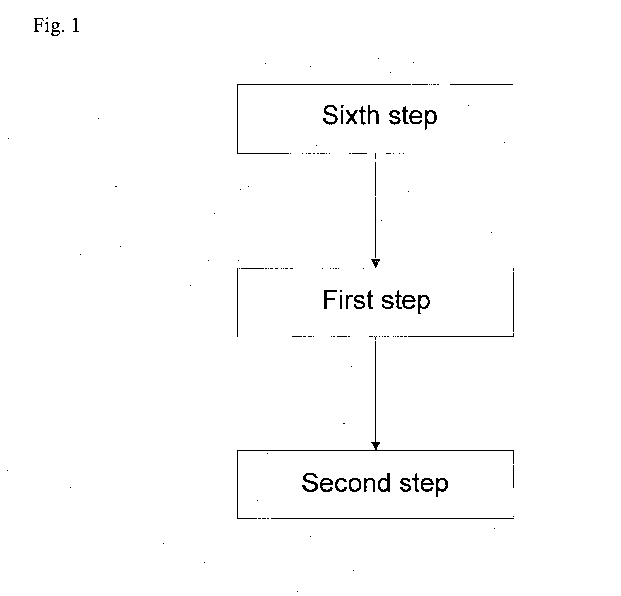

Fig. 1 is a flow sheet for Example 1.

In Example 1, a synthetic adsorbent packed column, an activated alumina packed column, and a cation-exchange resin packed column were prepared. Procedures for preparation of the individual columns are as follows.

<Synthetic adsorbent packed column>

In a polyethylene container having a capacity of 1,000 ml were placed 300 ml of a synthetic adsorbent and 600 ml of methanol, and the resultant mixture was allowed to stand for 24 hours. Then, the synthetic adsorbent was cleaned using 1,000 ml of ion-exchanged water simultaneously with separating methanol by filtration by means of suction, and the resultant synthetic adsorbent was transferred to a glass beaker having a capacity of 1,000 ml. An operation of adding 700 ml of ion-exchanged water to the beaker and then removing the supernatant by decantation was repeated 4 times.

A perfluoroalkoxyalkane (PFA) column having an inner diameter of 25 mm was packed with 140 ml of the above-cleaned synthetic adsorbent. As a synthetic adsorbent, SEPABEADS SP70 (manufactured by Mitsubishi Chemical Corporation) was used. In the filtration by means of suction, a polytetrafluoroethylene (PTFE) membrane filter having a pore diameter of 10 $\mu$m (manufactured by Advantec Toyo Kaisha, Ltd.) was used.

<Activated alumina packed column>

In a polyethylene container having a capacity of 1,000 ml was placed 300 ml of activated alumina. Then, an operation of adding 600 ml of purified water to the container and removing the supernatant by decantation was repeated 4 times. Further, purified water was allowed to flow through the container at 150 ml/min for 4 hours.

A perfluoroalkoxyalkane (PFA) column having an inner diameter of 25 mm was packed with 140 ml of the activated alumina which had been in contact with purified water as mentioned above. As activated alumina, AC-12R (manufactured by Sumitomo Chemical Co., Ltd.) was used.

<Cation-exchange resin packed column>

A perfluoroalkoxyalkane (PFA) column having an inner diameter of 40 mm was packed with 300 ml of a cation-exchange resin. Then, for changing the cation-exchange resin into a hydrogen ion type, an aqueous sulfuric acid solution having a concentration of 1 mol/L was passed through the column in the direction of from the upper portion to the lower portion of the column at 3,000 ml/Hr for 2 hours, and then purified water was passed through the column at 3,000 ml/Hr for 3 hours.

A perfluoroalkoxyalkane (PFA) column having an inner diameter of 25 mm was packed with 140 ml of the thus obtained cation-exchange resin of a hydrogen ion type. As a cation-exchange resin, Amberlite 200CTH (manufactured by Organo Corporation) was used.

The synthetic adsorbent packed column, activated alumina packed column, and cation-exchange resin packed column were connected in this order in series. Thus, an apparatus for purifying an aqueous hydrogen peroxide solution was prepared.

Purified water was allowed to flow through the three columns from the synthetic adsorbent packed column side. The purified water was allowed to flow in the direction of from the lower portion to the upper portion of the column. The purified water was allowed to flow at a rate of 1,400 ml/Hr for 28 hours. The result confirmed that the purified water which had been passed through the three columns had a silicon concentration of 1 ppb or less.

As purified water, ultrapure water obtained by purifying ion-exchanged water with MINIPURE TW-300RU (manufactured by Nomura Micro Science Co., Ltd.) was used. This ultrapure water has a silicon concentration of less than 1 ppb. In the purification of ion-exchanged water, three methods, i.e., ion-exchange, a reverse osmosis membrane, and an ultrafiltration membrane were used.

<Aqueous hydrogen peroxide solution>

Next, an aqueous hydrogen peroxide solution was prepared.

Properties of the prepared aqueous hydrogen peroxide solution are as follows.

Method for preparation: Anthraquinone method
Hydrogen peroxide concentration: 32.8% by weight
Total carbon concentration (TC concentration): 74.4 ppm
Silicon concentration: 8.6 ppb
Aluminum concentration: 145 ppb
Calcium concentration: 2 ppb
Magnesium concentration: 1 ppb
Sodium concentration: 95 ppb

<Purification of the aqueous hydrogen peroxide solution>

The aqueous hydrogen peroxide solution was allowed to flow through the above-mentioned three columns which were immersed in a water bath at 8°C.

The aqueous hydrogen peroxide solution was allowed to flow from the synthetic adsorbent packed column side.

The aqueous hydrogen peroxide solution was allowed to flow in the direction of from the lower portion to the upper portion of the column.

The aqueous hydrogen peroxide solution was allowed to flow at a rate of 1,400 ml/Hr for 6 hours.

The aqueous hydrogen peroxide solution passing through the synthetic adsorbent packed column had a space velocity of 10 Hr$^{-1}$.

The aqueous hydrogen peroxide solution passing through the activated alumina packed column had a space velocity of 10 Hr$^{-1}$.

The aqueous hydrogen peroxide solution passing through the cation-exchange resin packed column had a space velocity of 10 Hr$^{-1}$.

A sample was taken every one hour from the aqueous hydrogen peroxide solution which had been passed through the above-mentioned three columns. With respect to each sample of the aqueous hydrogen peroxide solution, a hydrogen peroxide concentration, a total carbon concentration (TC concentration), a silicon concentration, an aluminum concentration, a calcium concentration, a magnesium concentration, and a sodium concentration were measured. The results of the measurement are shown in Table 1 below. In Table 1, the figures in the column at the left end individually indicate the total amount of the aqueous hydrogen peroxide solution fed to the columns until each time of the measurement.

[Table 1]

| Amount of aqueous hydrogen peroxide solution fed | Hydrogen peroxide concentration | TC concentration | Si concentration | Al concentration | Ca concentration | Mg concentration | Na concentration |
|---|---|---|---|---|---|---|---|
| ml | wt% | ppm | ppb | ppb | ppb | ppb | ppb |
| (Raw material) | 32.8 | 74.4 | 8.6 | 145 | 2 | 1 | 95 |
| 1400 | 32.8 | 0.7 | <1 | 39 | <1 | <1 | <1 |
| 2800 | 32.8 | 1.8 | <1 | 22 | <1 | <1 | <1 |
| 4200 | 32.8 | 3.5 | <1 | 17 | <1 | <1 | <1 |
| 5600 | 32.8 | 4.7 | <1 | 12 | <1 | <1 | <1 |
| 7000 | 32.8 | 5.6 | <1 | 10 | <1 | <1 | <1 |
| 8400 | 32.8 | 6.3 | <1 | 14 | <1 | <1 | <1 |

The hydrogen peroxide concentration was measured using a density meter DA-310 (manufactured by Kyoto Electronics Manufacturing Co., Ltd.).

The total carbon concentration (TC concentration) was measured using a total organic carbon meter multi N/C 3100 (manufactured by Analytik Jena AG). A standard solution obtained by diluting a commercially available 1,000 mg/L standard solution (manufactured by AccuStandard, Inc.) was used.

The silicon concentration was measured using an atomic absorption spectrometer spectrAA 880Z (manufactured by Varian, Inc.). A standard solution obtained by diluting a commercially available 1,000 mg/L standard solution (manufactured by Kanto Chemical Co., Inc.) was used.

The aluminum, calcium, magnesium, and sodium concentrations were measured using an inductively coupled plasma emission spectrometer iCAP 6000 (manufactured by Thermo Fisher SCIENTIFIC K.K.).

[Example 2]

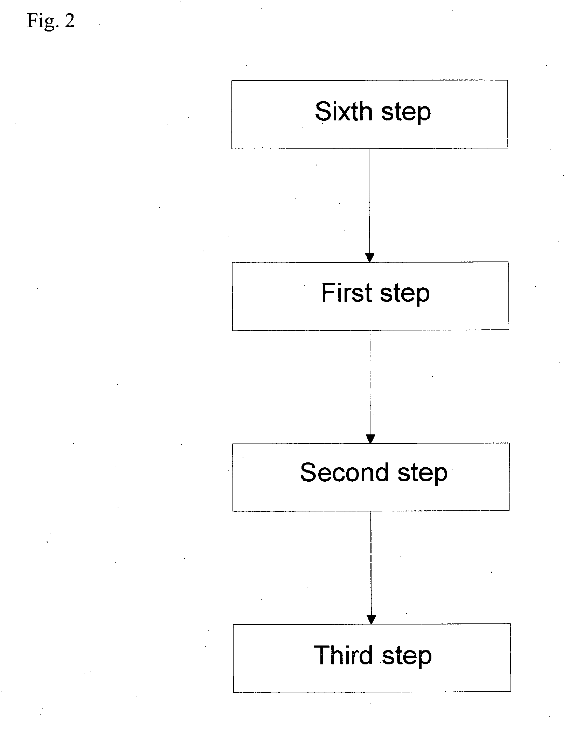

Fig. 2 is a flow sheet for Example 2.

In Example 2, substantially the same test as in Example 1 was performed except that a polytetrafluoroethylene filter having an average pore diameter of 0.1 $\mu$m (small-size capsule filter DFA, manufactured by Pall Corporation) was connected downstream of the cation-exchange resin packed column.

Properties of the aqueous hydrogen peroxide solution used in Example 2 are as follows.

Method for preparation: Anthraquinone method
Hydrogen peroxide concentration: 32.9% by weight
Total carbon concentration (TC concentration): 98.7 ppm
Silicon concentration: 9.8 ppb
Aluminum concentration: 145 ppb
Calcium concentration: 3 ppb
Magnesium concentration: 1 ppb
Sodium concentration: 130 ppb

A sample was taken every one hour from the aqueous hydrogen peroxide solution which had been passed through the above-mentioned three columns and filter. With respect to each sample of the aqueous hydrogen peroxide solution, a hydrogen peroxide concentration, a total carbon concentration (TC concentration), a silicon concentration, an aluminum concentration, a calcium concentration, a magnesium concentration, and a sodium concentration were measured. The results of the measurement are shown in Table 2 below. In Table 2, the figures in the column at the left end individually indicate the total amount of the aqueous hydrogen peroxide solution fed to the columns and filter until each time of the measurement.

The aqueous hydrogen peroxide solution passing through the synthetic adsorbent packed column had a space velocity of 10 $Hr^{-1}$.

The aqueous hydrogen peroxide solution passing through the activated alumina packed column had a space velocity of 10 $Hr^{-1}$.

The aqueous hydrogen peroxide solution passing through the cation-exchange resin packed column had a space velocity of 10 $Hr^{-1}$.

[Table 2]

| Amount of aqueous hydrogen peroxide solution fed | Hydrogen peroxide concentration | TC concentration | Si concentration | Al concentration | Ca concentration | Mg concentration | Na concentration |
|---|---|---|---|---|---|---|---|
| ml | wt% | ppm | ppb | ppb | ppb | ppb | ppb |
| (Raw material) | 32.9 | 98.7 | 9.8 | 145 | 3 | 1 | 130 |
| 1400 | 32.7 | 0.8 | <1 | 8 | <1 | <1 | <1 |
| 2800 | 32.8 | 1.9 | <1 | 8 | <1 | <1 | <1 |
| 4200 | 32.9 | 3.5 | <1 | 6 | <1 | <1 | <1 |
| 5600 | 32.9 | 4.6 | <1 | 4 | <1 | <1 | <1 |
| 7000 | 32.9 | 5.4 | <1 | 7 | <1 | <1 | <1 |
| 8400 | 32.9 | 6.5 | <1 | 9 | <1 | <1 | <1 |

[Example 3]

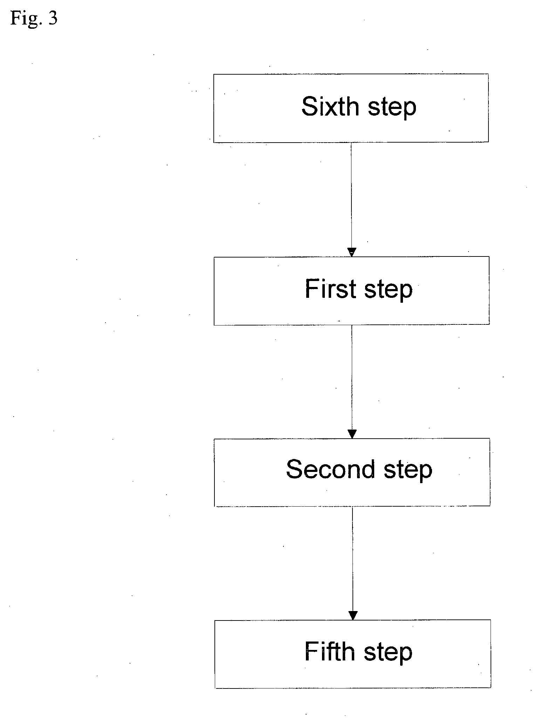

Fig. 3 is a flow sheet for Example 3.

In Example 3, the aqueous hydrogen peroxide solution purified in Example 1 was further passed through a cation-exchange resin packed column and an anion/cation-exchange resin mixed bed column. Procedures for preparation of the cation-exchange resin packed column and anion/cation-exchange resin mixed bed column are as follows.

<Cation-exchange resin packed column>

A perfluoroalkoxyalkane (PFA) column having an inner diameter of 40 mm was packed with 300 ml of a cation-exchange resin. Then, for changing the cation-exchange resin into a hydrogen ion type, an aqueous sulfuric acid solution having a concentration of 1 mol/L was passed through the column in the direction of from the upper portion to the lower portion of the column at 3,000 ml/Hr for 2 hours, and then purified water was passed through the column at 3,000 ml/Hr for 3 hours.

A perfluoroalkoxyalkane (PFA) column having an inner diameter of 13 mm was packed with 30 ml of the thus obtained cation-exchange resin of a hydrogen ion type, and then purified water was allowed to flow through the column in the direction of from the upper portion to the lower portion of the column at a rate of 1,440 ml/Hr for one hour. As a cation-exchange resin, Amberlite 200CTH (manufactured by Organo Corporation) was used.

<Anion/cation-exchange resin mixed bed column>

A perfluoroalkoxyalkane (PFA) column having an inner diameter of 40 mm was packed with 300 ml of an anion-exchange resin. Then, for changing the anion-exchange resin into a bicarbonic acid ion type, an aqueous sulfuric acid solution having a concentration of 1 mol/L, purified water, and an aqueous sodium bicarbonate solution having a concentration of 0.5 mol/L were individually passed through the column in the direction of from the upper portion to the lower portion of the column at a rate of 3,000 ml/Hr respectively for 2 hours. As an anion-exchange resin, DIAION PA316 (manufactured by Mitsubishi Chemical Corporation) was used.

A perfluoroalkoxyalkane (PFA) column having an inner diameter of 40 mm was packed with 300 ml of a cation-exchange resin. Then, for changing the cation-exchange resin into a hydrogen ion type, an aqueous sulfuric acid solution having a concentration of 1 mol/L was passed through the column in the direction of from the upper portion to the lower portion of the column at 3,000 ml/Hr for 2 hours, and then purified water was passed through the column at 3,000 ml/Hr for 3 hours. As a cation-exchange resin, DIAION PK228 (manufactured by Mitsubishi Chemical Corporation) was used.

The anion-exchange resin and cation-exchange resin were mixed in a 1:1 capacity ratio, and then a perfluoroalkoxyalkane (PFA) column having an inner diameter of 13 mm was packed with 30 ml of the resultant mixture.

The thus prepared anion/cation-exchange resin mixed bed column was connected downstream of the cation-exchange resin packed column.

Purified water at 15°C was allowed to flow through the two columns from the cation-exchange resin packed column side. The purified water was allowed to flow in the direction of from the upper portion to the lower portion of the column. The purified water was allowed to flow at a rate of 1,440 ml/Hr for 30 minutes. The result confirmed that the purified water which had been passed through the two columns had a silicon concentration of 1 ppb or less.

As purified water, ultrapure water obtained by purifying ion-exchanged water with MINIPURE TW-300RU (manufactured by Nomura Micro Science Co., Ltd.) was used. This ultrapure water has a silicon concentration of less than 1 ppb. In the purification of ion-exchanged water, three methods, i.e., ion-exchange, a reverse osmosis membrane, and an ultrafiltration membrane were used.

<Purification of the aqueous hydrogen peroxide solution>

The aqueous hydrogen peroxide solution purified in Example 1 was cooled to 15°C. Then, the cooled aqueous hydrogen peroxide solution was passed through the cation-exchange resin packed column and anion/cation-exchange resin mixed bed column which were prepared in Example 3.

The aqueous hydrogen peroxide solution was allowed to flow from the cation-exchange resin packed column side.

The aqueous hydrogen peroxide solution was allowed to flow at a rate of 4,200 ml/Hr for one hour.

The aqueous hydrogen peroxide solution had a phosphoric acid ion concentration of less than 10 ppb.

The aqueous hydrogen peroxide solution passing through the cation-exchange resin packed column had a space velocity of 140 Hr$^{-1}$.

The aqueous hydrogen peroxide solution passing through the anion/cation-exchange resin mixed bed column had a space velocity of 140 Hr$^{-1}$.

A sample was taken every 30 minutes from the aqueous hydrogen peroxide solution which had been passed through the above-mentioned two columns. With respect to each sample of the aqueous hydrogen peroxide solution, a silicon concentration, an aluminum concentration, a calcium concentration, a magnesium concentration, and a sodium concentration were measured. In the measurement of these concentrations, an inductively coupled plasma mass spectrometer 7500cs (manufactured by Agilent Technologies, Inc.) was used. The results of the measurement are shown in Table 3 below. In Table 3, the figures in the column at the left end individually indicate the total amount of the aqueous hydrogen peroxide solution fed to the columns until each time of the measurement.

[Table 3]

| Amount of aqueous hydrogen peroxide solution fed | Si concentration | Al concentration | Ca concentration | Mg concentration | Na concentration |
|---|---|---|---|---|---|
| ml | ppb | ppt | ppt | ppt | ppt |
| 2100 | <1 | 2600 | <1 | 2 | 13 |
| 4200 | <1 | 5600 | <1 | <1 | 3 |

[Example 4]

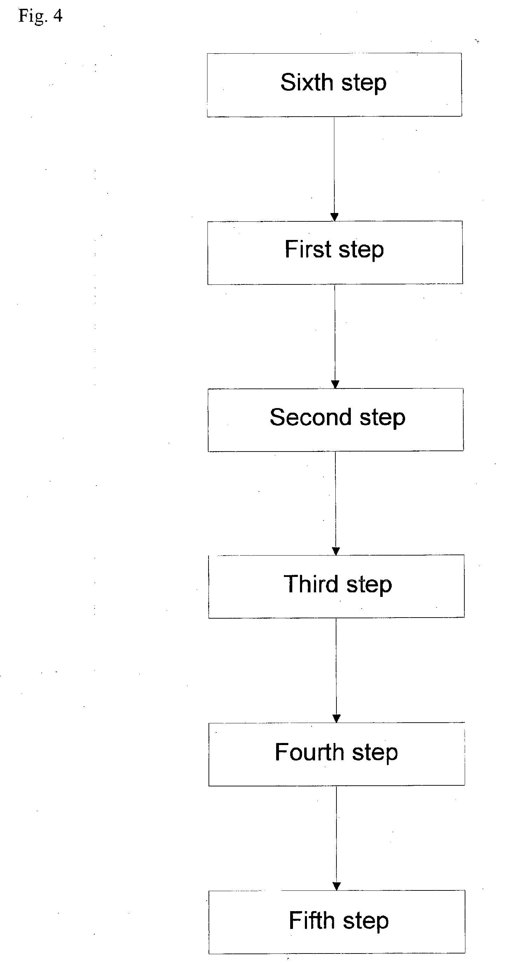

Fig. 4 is a flow sheet for Example 4.

In Example 4, phosphoric acid was added to the aqueous hydrogen peroxide solution purified in Example 2 to prepare an aqueous hydrogen peroxide solution having a phosphoric acid ion concentration of 176 ppb. Then, the prepared aqueous hydrogen peroxide solution was cooled to 15°C, and then passed through the cation-exchange resin packed column and anion/cation-exchange resin mixed bed column which were prepared according to the same procedure as in Example 3.

The aqueous hydrogen peroxide solution was allowed to flow from the cation-exchange resin packed column side.

The aqueous hydrogen peroxide solution was allowed to flow at a rate of 4,200 ml/Hr for one hour.

The aqueous hydrogen peroxide solution which had been passed through the columns was had a phosphoric acid ion concentration of less than 0.5 ppb.

The aqueous hydrogen peroxide solution passing through the cation-exchange resin packed column had a space velocity of 140 $Hr^{-1}$.

The aqueous hydrogen peroxide solution passing through the anion/cation-exchange resin mixed bed column had a space velocity of 140 $Hr^{-1}$.

In Examples 3 and 4, the phosphoric acid ion ($PO_4^{3-}$) concentration was measured using ion chromatography DX-500 (manufactured by DIONEX Corporation). A concentration column Ionpac AG17-C (manufactured by DIONEX Corporation), a guard column Ionpac AG11 (manufactured by DIONEX Corporation), a separation column Ionpac AS-11 (manufactured by DIONEX Corporation), and a loop with 2 ml were used. A standard solution obtained by diluting a commercially available 1,000 mg/L standard solution (manufactured by Kanto Chemical Co., Inc.) was used. An eluent was prepared by dissolving sodium hydroxide of a grade for precision analysis (manufactured by Kanto Chemical Co., Inc.) in purified water.

A sample was taken every 30 minutes from the aqueous hydrogen peroxide solution which had been passed through the above-mentioned two columns. With respect to each sample of the aqueous hydrogen peroxide solution, a silicon concentration, an aluminum concentration, a calcium concentration, a magnesium concentration, and a sodium concentration were measured. In the measurement of these concentrations, an inductively coupled plasma mass spectrometer 7500cs (manufactured by Agilent Technologies, Inc.) was used. The results of the measurement are shown in Table 4 below. In Table 4, the figures in the column at the left end individually indicate the total amount of the aqueous hydrogen peroxide solution fed to the columns until each time of the measurement.

[Table 4]

| Amount of aqueous hydrogen peroxide solution fed | Si concentration | Al concentration | Ca concentration | Mg concentration | Na concentration |
|---|---|---|---|---|---|
| ml | ppb | ppt | ppt | ppt | ppt |
| 2100 | <1 | 14 | 2 | <1 | 1 |

(continued)

| Amount of aqueous hydrogen peroxide solution fed | Si concentration | Al concentration | Ca concentration | Mg concentration | Na concentration |
|---|---|---|---|---|---|
| 4200 | <1 | 1 | <1 | <1 | 2 |

[Comparative Example 1]

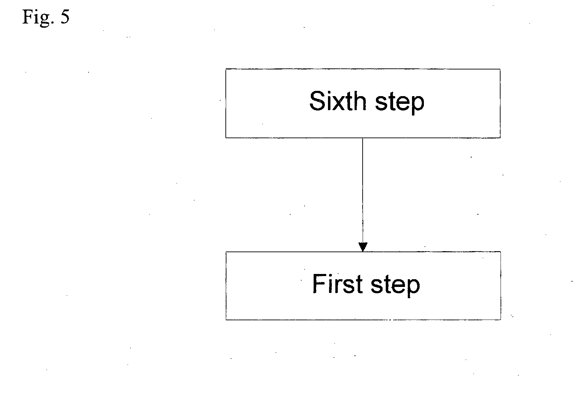

Fig. 5 is a flow sheet for Comparative Example 1.

In Comparative Example 1, a synthetic adsorbent packed column and an activated alumina packed column were first prepared. Procedures for preparation of the individual columns are the same as those in Example 1.

The synthetic adsorbent packed column and activated alumina packed column were connected in this order in series. Thus, an apparatus for purifying an aqueous hydrogen peroxide solution was prepared.

Purified water was allowed to flow through the two columns from the synthetic adsorbent packed column side. The purified water was allowed to flow in the direction of from the lower portion to the upper portion of the column. The purified water was allowed to flow at a rate of 1,400 ml/Hr for 28 hours. The result confirmed that the purified water which had been passed through the two columns had a silicon concentration of 1 ppb or less. The same purified water as that used in Example 1 was used.

<Aqueous hydrogen peroxide solution>

Next, an aqueous hydrogen peroxide solution was prepared.

Properties of the prepared aqueous hydrogen peroxide solution are as follows.

Method for preparation: Anthraquinone method
Hydrogen peroxide concentration: 32.5% by weight
Total carbon concentration (TC concentration): 78.6 ppm
Silicon concentration: 7.6 ppb
Aluminum concentration: 125 ppb
Calcium concentration: 2 ppb
Magnesium concentration: 1 ppb
Sodium concentration: 104 ppb

<Purification of the aqueous hydrogen peroxide solution>

The aqueous hydrogen peroxide solution was allowed to flow through the above-mentioned two columns which were immersed in a water bath at 8°C.

The aqueous hydrogen peroxide solution was allowed to flow from the synthetic adsorbent packed column side.

The aqueous hydrogen peroxide solution was allowed to flow in the direction of from the lower portion to the upper portion of the column.

The aqueous hydrogen peroxide solution was allowed to flow at a rate of 1,400 ml/Hr for 3 hours.

The aqueous hydrogen peroxide solution passing through the synthetic adsorbent packed column had a space velocity of 10 $Hr^{-1}$.

The aqueous hydrogen peroxide solution passing through the activated alumina packed column had a space velocity of 10 $Hr^{-1}$.

A sample was taken every one hour from the aqueous hydrogen peroxide solution which had been passed through the above-mentioned two columns. With respect to each sample of the aqueous hydrogen peroxide solution, a hydrogen peroxide concentration, a total carbon concentration (TC concentration), a silicon concentration, an aluminum concentration, a calcium concentration, a magnesium concentration, and a sodium concentration were measured. The measurement of each concentration was performed by the same method as mentioned above in Example 1. The results of the measurement are shown in Table 5 below. In Table 5, the figures in the column at the left end individually indicate the total amount of the aqueous hydrogen peroxide solution fed to the columns until each time of the measurement.

[Table 5]

| Amount of aqueous hydrogen peroxide solution fed | Hydrogen peroxide concentration | TC concentration | Si concentration | Al concentration | Ca concentration | Mg concentration | Na concentration |
|---|---|---|---|---|---|---|---|
| ml | wt% | ppm | ppb | ppb | ppb | ppb | ppb |
| (Raw material) | 32.5 | 78.6 | 7.6 | 125 | 2 | 1 | 104 |
| 1400 | 32.4 | 0.7 | <1 | 140 | 4558 | 30 | 131 |
| 2800 | 32.4 | 1.7 | <1 | 85 | 836 | 12 | 115 |
| 4200 | 32.4 | 3.2 | <1 | 183 | 330 | 6 | 112 |

**Claims**

1. A method for producing an aqueous hydrogen peroxide solution, comprising:

   a first step for contacting an aqueous hydrogen peroxide solution with activated alumina which has been cleaned with purified water, and
   a second step for, after the first step, contacting the resultant aqueous hydrogen peroxide solution with a cation-exchange resin.

2. The method according to claim 1, wherein the cation-exchange resin is a hydrogen ion-type, strongly acid cation-exchange resin having a sulfonic acid group.

3. The method according to claim 1 or 2, wherein the aqueous hydrogen peroxide solution being in contact with the activated alumina and the cation-exchange resin has a temperature of 30°C or lower.

4. The method according to any one of claims 1 to 3, wherein, in the first step, the aqueous hydrogen peroxide solution is allowed to pass through the activated alumina in a continuous manner, and
   wherein, in the second step, the aqueous hydrogen peroxide solution is allowed to pass through the cation-exchange resin in a continuous manner.

5. The method according to claim 4, wherein the aqueous hydrogen peroxide solution passing through the activated alumina has a space velocity (SV) of 0.5 to 50 $Hr^{-1}$, and
   wherein the aqueous hydrogen peroxide solution passing through the cation-exchange resin has a space velocity (SV) of 1 to 300 $Hr^{-1}$.

6. The method according to any one of claims 1 to 5, further comprising:

   a third step for, after the first step, subjecting the resultant aqueous hydrogen peroxide solution to filtration using a filter having an average pore diameter of 1 $\mu$m or less.

7. The method according to any one of claims 1 to 6, further comprising:

   a fourth step for, after the second step, adding at least one substance selected from phosphoric acid, pyrophosphoric acid, a phosphate, and a pyrophosphate to the aqueous hydrogen peroxide solution, and
   a fifth step for, after the fourth step, contacting the resultant aqueous hydrogen peroxide solution with an anion-exchange resin and/or a mixed bed of an anion-exchange resin and a cation-exchange resin.

8. The method according to claim 7, wherein, in the fourth step, the at least one substance selected from phosphoric acid, pyrophosphoric acid, a phosphate, and a pyrophosphate is added to the aqueous hydrogen peroxide solution so that the concentration of the total of phosphoric acid ions and pyrophosphoric acid ions contained in the aqueous hydrogen peroxide solution becomes 0.01 to 100 ppm.

9. The method according to claim 7 or 8, wherein, in the fifth step, the aqueous hydrogen peroxide solution being in contact with the anion-exchange resin and/or the mixed bed of an anion-exchange resin and a cation-exchange resin has a temperature of 30°C or lower.

10. The method according to any one of claims 7 to 9, wherein, in the fifth step, the aqueous hydrogen peroxide solution is contacted with the anion-exchange resin and/or the mixed bed of an anion-exchange resin and a cation-exchange resin in a continuous manner.

11. The method according to claim 10, wherein, in the fifth step, the aqueous hydrogen peroxide solution being in contact with the anion-exchange resin and/or the mixed bed of an anion-exchange resin and a cation-exchange resin has a space velocity (SV) of 1 to 300 $Hr^{-1}$.

12. The method according to any one of claims 1 to 11, further comprising:

   a sixth step for contacting the aqueous hydrogen peroxide solution with a synthetic adsorbent.

13. The method according to claim 12, wherein, in the sixth step, the aqueous hydrogen peroxide solution is allowed to pass through the synthetic adsorbent in a continuous manner.

14. The method according to claim 13, wherein, in the sixth step, the aqueous hydrogen peroxide solution passing through the synthetic adsorbent has a space velocity (SV) of 1 to 300 $Hr^{-1}$.

15. The method according to any one of claims 1 to 14, wherein the aqueous hydrogen peroxide solution is an aqueous hydrogen peroxide solution prepared by an anthraquinone method.

Fig. 1

```
┌─────────────────────────────┐
│         Sixth step          │
└─────────────────────────────┘
               │
               ▼
┌─────────────────────────────┐
│         First step          │
└─────────────────────────────┘
               │
               ▼
┌─────────────────────────────┐
│        Second step          │
└─────────────────────────────┘
```

Fig. 2

```
┌─────────────────────────────┐
│         Sixth step          │
└─────────────────────────────┘
              │
              ▼
┌─────────────────────────────┐
│         First step          │
└─────────────────────────────┘
              │
              ▼
┌─────────────────────────────┐
│         Second step         │
└─────────────────────────────┘
              │
              ▼
┌─────────────────────────────┐
│         Third step          │
└─────────────────────────────┘
```

Fig. 3

```
┌─────────────────────────────┐
│         Sixth step          │
└─────────────────────────────┘
               │
               ▼
┌─────────────────────────────┐
│         First step          │
└─────────────────────────────┘
               │
               ▼
┌─────────────────────────────┐
│        Second step          │
└─────────────────────────────┘
               │
               ▼
┌─────────────────────────────┐
│         Fifth step          │
└─────────────────────────────┘
```

Fig. 4

```
        ┌─────────────────────┐
        │     Sixth step      │
        └─────────────────────┘
                   │
                   ▼
        ┌─────────────────────┐
        │     First step      │
        └─────────────────────┘
                   │
                   ▼
        ┌─────────────────────┐
        │     Second step     │
        └─────────────────────┘
                   │
                   ▼
        ┌─────────────────────┐
        │     Third step      │
        └─────────────────────┘
                   │
                   ▼
        ┌─────────────────────┐
        │     Fourth step     │
        └─────────────────────┘
                   │
                   ▼
        ┌─────────────────────┐
        │     Fifth step      │
        └─────────────────────┘
```

Fig. 5

```
┌─────────────────────────────┐
│          Sixth step          │
└─────────────────────────────┘
               │
               ▼
┌─────────────────────────────┐
│          First step          │
└─────────────────────────────┘
```

## INTERNATIONAL SEARCH REPORT

| International application No. |
| --- |
| PCT/JP2012/067822 |

**A. CLASSIFICATION OF SUBJECT MATTER**
*C01B15/013*(2006.01)i

According to International Patent Classification (IPC) or to both national classification and IPC

**B. FIELDS SEARCHED**

Minimum documentation searched (classification system followed by classification symbols)
C01B15/013

Documentation searched other than minimum documentation to the extent that such documents are included in the fields searched
Jitsuyo Shinan Koho          1922-1996     Jitsuyo Shinan Toroku Koho      1996-2012
Kokai Jitsuyo Shinan Koho     1971-2012    Toroku Jitsuyo Shinan Koho       1994-2012

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
| --- | --- | --- |
| Y<br>A | JP 48-41158 B1  (FMC Corp. et al.),<br>05 December 1973 (05.12.1973),<br>claims; column 3, lines 4 to 9; column 4, line<br>39 to column 5, line 5<br>& US 3410659 A | 1-6,12-15<br>7-11 |
| Y<br>A | JP 2003-2619 A  (Santoku Chemical Industries<br>Co., Ltd.),<br>08 January 2003 (08.01.2003),<br>claims 1, 2, 4, 8; column 6, lines 20 to 22<br>(Family: none) | 1-6,12-15<br>7-11 |

☐ Further documents are listed in the continuation of Box C.  ☐ See patent family annex.

| | |
| --- | --- |
| * Special categories of cited documents:<br>"A" document defining the general state of the art which is not considered to be of particular relevance<br>"E" earlier application or patent but published on or after the international filing date<br>"L" document which may throw doubts on priority claim(s) or which is cited to establish the publication date of another citation or other special reason (as specified)<br>"O" document referring to an oral disclosure, use, exhibition or other means<br>"P" document published prior to the international filing date but later than the priority date claimed | "T" later document published after the international filing date or priority date and not in conflict with the application but cited to understand the principle or theory underlying the invention<br>"X" document of particular relevance; the claimed invention cannot be considered novel or cannot be considered to involve an inventive step when the document is taken alone<br>"Y" document of particular relevance; the claimed invention cannot be considered to involve an inventive step when the document is combined with one or more other such documents, such combination being obvious to a person skilled in the art<br>"&" document member of the same patent family |

| Date of the actual completion of the international search<br>09 October, 2012 (09.10.12) | Date of mailing of the international search report<br>16 October, 2012 (16.10.12) |
| --- | --- |
| Name and mailing address of the ISA/<br>Japanese Patent Office | Authorized officer |
| Facsimile No. | Telephone No. |

Form PCT/ISA/210 (second sheet) (July 2009)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 3797390 B
- JP 3818323 B
- JP 11079717 A
- JP 3895540 B
- JP 3849724 B
- JP SHO4841158 B